# EUROPÄISCHE PATENTSCHRIFT

(11) **EP 3 729 610 B1**
(45) Veröffentlichungstag und Bekanntmachung des Hinweises auf die Patenterteilung: **01.06.2022**
(21) Anmeldenummer: 19734382.5
(22) Anmeldetag: 27.06.2019
(51) Int. Cl.: H02K 5/128, H02K 5/10, H02K 5/173

(54) **MOTORANORDNUNG MIT EINEM SPALTTOPF**
MOTOR ASSEMBLY WITH A CAN
ENSEMBLE MOTEUR AVEC UN BIDON

(30) Priorität: 02.07.2018 DE 102018115952
(43) Veröffentlichungstag der Anmeldung: 28.10.2020
(73) Patentinhaber: ebm-papst St. Georgen GmbH & Co. KG, 78112 St. Georgen (DE)
(72) Erfinder: EHLERS, Volker, 78112 St. Georgen (DE); KÖNIG, Martin, 71083 Herrenberg (DE)
(74) Vertreter: Staeger & Sperling Partnerschaftsgesellschaft mbB
(86) Internationale Anmeldenummer: PCT/EP2019/067178
(87) Internationale Veröffentlichungsnummer: WO 2020/007707

(56) Entgegenhaltungen:
- EP-A1- 2 607 710
- EP-A2- 1 372 248
- WO-A1-92/00627
- WO-A1-2018/047602
- DE-A1- 10 034 302
- GB-A- 799 855
- JP-A- 2011 094 577
- US-A1- 2013 177 405
- US-B1- 8 083 500

## Beschreibung

Die Erfindung betrifft einen Motor mit einem Spalttopf.

Ein Spalttopf kann konstruktiv zum Aufbau eines Elektromotors verwendet werden. Bevorzugt kann ein Spalttopf dazu verwendet werden, eine Abdichtung zwischen einem Innenraum und einem Außenraum zu erzielen. Dies kann beispielsweise erforderlich sein, wenn bei einer Pumpe ein Aerosol mit brennbaren Bestandteilen gefördert werden soll.

Druckschriftlicher Stand der Technik im vorliegenden technischen Gebiet ist beispielsweise in den Dokumenten WO 2018/047602 A1, EP 2 607 710 A1, WO 92/00627 A1, US 2013/177405 A1 und EP 1 372 248 A2 offenbart.

Es ist eine Aufgabe der Erfindung, einen neuen Motor mit einem Spalttopf bereit zu stellen. Diese Aufgabe wird gelöst durch den Gegenstand des Anspruchs 1.

Durch die Überlappung des Spaltrohrteils und des Spalttopfbodenteils ist das Vorsehen einer Dichtung zwischen diesen Teilen vereinfacht und prozesssicher möglich. Wie es sich aus den Unteransprüchen ergibt, kann die Dichtung ein Dichtelement aufweisen, oder sie kann als stoffschlüssige Verbindung zwischen den beiden Teilen ausgebildet werden. Das Vorhandensein einer Dichtung sagt noch nichts über die genaue Qualität der Dichtung bzw. deren Dichtwirkung. Diese ist abhängig vom Einsatzzweck. Für einen Schutz gegen Staub und Spritzwasser kann beispielsweise bei elektrischen Geräten die Schutzart IP 54 ausreichend sein. Für einen Schutz vor Austritt explosiver Aerosole kann dagegen IP 68 oder höher erforderlich sein.

Gemäß einer bevorzugten Ausführungsform weist das Spalttopfbodenteil einen ersten Lagersitz auf, in welchem ersten Lagersitz das erste Lager vorgesehen ist. Dies erleichtert die Montage des ersten Lagers im Bereich des Spalttopfbodenteils.

Gemäß einer bevorzugten Ausführungsform weist das Spaltrohrteil einen zweiten Lagersitz auf, in welchem zweiten Lagersitz das zweite Lager vorgesehen ist. Hierdurch wird die Montage des zweiten Lagers im Bereich des Spaltrohrteils erleichtert, und die Anzahl der Montageschritte kann gering gehalten werden.

Gemäß einer bevorzugten Ausführungsform ist das Spalttopfbodenteil im ersten vorgegebenen axialen Bereich zumindest bereichsweise radial außerhalb des Spaltrohrteils angeordnet. Das Spaltrohrteil kann sich hierdurch radial außerhalb des Spaltrohrteils erstrecken und einen zusätzlichen Gehäuseabschnitt definieren, beispielsweise für den Stator.

Gemäß einer bevorzugten Ausführungsform sind der Innenrotor und das erste Lager voneinander beabstandet, so dass ein zweiter axiale Bereich zwischen dem Innenrotor und dem ersten Lager vorgesehen ist, und der erste vorgegebene axiale Bereich ist in axialer Richtung teilweise oder vollständig im zweiten vorgegebenen axialen Bereich vorgesehen. Dies ermöglicht eine kurze Ausgestaltung des Spalttopfs.

Gemäß einer bevorzugten Ausführungsform weist das Spaltrohrteil ein dem Spalttopfbodenteil zugewandtes axiales Ende auf, und die Rotoranordnung erstreckt sich auf beiden axialen Seiten des axialen Endes. Die Ersteckung der Rotoranordnung auf beiden axialen Seiten vereinfacht die Montage und Ausgestaltung des Rotortopfteils, da dieses bei der Montage außerhalb des Spaltrohrteils Kontakt zur Rotoranordnung aufnehmen kann.

Gemäß einer bevorzugten Ausführungsform weist das Spaltrohrteil oder das Spalttopfbodenteil einen ringförmigen Abschnitt auf, wobei der Außenstator an seiner Außenfläche mit dem ringförmigen Abschnitt verbunden ist, bevorzugt durch eine Presspassverbindung, eine Klebeverbindung oder eine Schraubverbindung. Die Verbindung des Außenstators mit einem der Teile reduziert in vorteilhafter Weise die Anzahl der erforderlichen Bauteile.

Gemäß einer bevorzugten Ausführungsform weist die Dichtung ein Dichtelement auf, welches als mit dem Spalttopfbodenteil verbundene Schicht aus einem elastomeren Werkstoff ausgebildet ist. Ein solches Dichtelement lässt sich gut und reproduzierbar fertigen, und es ist kein zusätzlicher Prozessschritt bei der Montage für das Hinzufügen eines separaten Dichtelements erforderlich.

Gemäß einer bevorzugten Ausführungsform ist das Dichtelement als Spritzgusselement ausgebildet ist. Die Ausbildung als Spritzgusselement ist günstig und mit geringen Toleranzen möglich.

In einer erfindungsgemäßen Ausführungsform weist die Dichtung ein Dichteiement auf, das Spaltrohrteil weist an der Außenfläche Spaltrohrteilvorsprünge auf, der Außenstator weist einen Statorkern, eine Wicklungsanordnung und ein Formteil auf, das Formteil weist eine Mehrzahl von Formteilvorsprüngen auf, und die Motoranordnung definiert im ersten vorgegebenen axialen Bereich einen Dichtelementraum, welcher Dichtelementraum
- radial innen zumindest bereichsweise durch das Spaltrohrteil definiert ist,
- radial außen zumindest bereichsweise durch das Spalttopfbodenteil definiert ist,
- auf einer ersten axialen Seite zumindest bereichsweise durch das Spalttopfbodenteil definiert ist, und
- auf einer der ersten axialen Seite gegenüber liegenden zweiten axialen Seite zumindest bereichsweise durch die Formteilvorsprünge definiert ist,
wobei im Dichtelementraum das Dichtelement angeordnet ist.

Diese Ausführungsform definiert in vorteilhafter Weise einen Dichtelementraum, in dem ein Dichtelement vorgesehen werden kann, und die Montage des Dichtelements ist in vorteilhafter Weise möglich. Die zweite axiale Seite wird zumindest bereichsweise durch die Formteilvorsprünge definiert.

Gemäß einer bevorzugten Ausführungsform weist das Dichtelement einen Dichtring auf. Dichtringe sind vorteilhaft für eine umlaufende Abdichtung zwischen den Bauteilen.

Gemäß einer bevorzugten Ausführungsform weist das Dichtelement einen O-Ring, einen X-Ring oder einen V-Ring auf. Mit diesen Arten der Dichtelemente kann bei der vorliegenden Ausgestaltung eine gute Abdichtung erzielt werden.

Gemäß einer bevorzugten Ausführungsform weist das Dichtelement einen Stützring und einen Dichtring auf, wobei der Stützring an der zweiten axialen Seite des Dichtelementraums zumindest bereichsweise gegen die Spaltrohrteilvorsprünge oder zumindest bereichsweise gegen die Formteilvorsprünge anliegt, und wobei der Dichtring zwischen dem Stützring und der ersten axialen Seite des Dichtelementraums angeordnet ist. Das Vorsehen des Stützrings führt zu einem gleichmäßigeren Druck auf den Dichtring, wenn der Dichtelementraum nicht überall gleich ausgebildet ist. Hierdurch kann die Dichtwirkung erhöht werden.

Gemäß einer bevorzugten Ausführungsform ist das Dichtelement zumindest bereichsweise in radialer Richtung im Dichtelementraum verpresst. Durch die Verpressung wird die Dichtwirkung erhöht, und dies führt zu einer größeren Sicherheit.

Gemäß einer bevorzugten Ausführungsform ist das Formteil als Statorendscheibe oder als Statorumspritzung ausgebildet. Mit solchen Formteilen kann die Form des Formteils mit sehr geringen Toleranzen und in der gewünschten Ausgestaltung hergestellt werden.

Gemäß einer bevorzugten Ausführungsform ist das Formteil zusätzlich als Isolierkörper ausgebildet, auf dem die Wicklungsanordnung zumindest bereichsweise gewickelt ist. Das Formteil kann hierdurch auch als Isolierteil wirken, und es sind keine zusätzlichen Verfahrensschritte nötig, um eine Isolierung herzustellen.

Gemäß einer bevorzugten Ausführungsform ist das Formteil als Träger für einen Wicklungsanschluss ausgebildet. Durch diese Ausgestaltung kann das Formteil zur Anordnung eines Wicklungsanschlusses dienen und eine zusätzliche Funktion verwirklichen.

Gemäß einer bevorzugten Ausführungsform weist der Außenstator auf der Innenfläche Statornuten auf, welche Statornuten dazu ausgebildet sind, bei der Montage der Motoranordnung ein Aufschieben des Außenstators auf das Spaltrohrteil unter Bewegung der Spaltrohrteilvorsprünge in den Statornuten zu ermöglichen. Die Ausrichtung des Stators erfolgt somit durch die Spaltrohrteilvorsprünge.

Gemäß einer bevorzugten Ausführungsform sind die Spaltrohrteilvorsprünge als Rippen ausgebildet und erstrecken sich in axialer Richtung bis in den Bereich der Statornuten, um hierdurch eine Ausrichtung des Außenstators relativ zum Spaltrohrteil zu ermöglichen. Die Ausrichtung ist hierdurch über die Bewegung hinweg gegeben.

Gemäß einer bevorzugten Ausführungsform ist in jeder Statornut ein Spaltrohrteilvorsprung zumindest bereichsweise angeordnet. Die Kräfte werden dadurch gleichmäßig verteilt.

Gemäß einer bevorzugten Ausführungsform weist der Außenstator ausgeprägte Statorpole mit Statorpolköpfen auf, und die Spaltrohrteilvorsprünge greifen in den Bereich der Statornuten zwischen den Statorpolköpfen ein. Dies ergibt eine vorteilhafte Ausgestaltung, bei der mit Statorpolköpfen eine Ausrichtung des Stators erfolgen kann.

Gemäß einer bevorzugten Ausführungsform ist die Dichtung als Klebeverbindung mit einem Klebstoff ausgebildet, welcher Klebstoff das Spaltrohrteil und das Spalttopfbodenteil miteinander verbindet. Durch die Verwendung von Klebstoff ist es möglich, eine Dichtung ohne ein zusätzliches geformtes Dichtelement herzustellen.

Gemäß einer bevorzugten Ausführungsform ist die Dichtung als Schweißverbindung ausgebildet, welche Schweißverbindung das Spaltrohrteil und das Spalttopfbodenteil miteinander verbindet. Auch Schweißverbindungen können ohne zusätzliches Dichtelement hergestellt werden. Zudem können Schweißverbindungen sehr dicht ausgebildet werden.

Gemäß einer bevorzugten Ausführungsform bildet das Spalttopfbodenteil zumindest bereichsweise eine Nut aus, in welche Nut das Spaltrohrteil eingreift, wobei die Nut bevorzugt als umlaufende Nut ausgebildet ist. Das Vorsehen einer Nut ermöglicht bei unterschiedlichen Dichtungen eine einfache Montage, und beim Fügen der Bauteile wird die Ausrichtung vereinfacht. Alternativ kann eine solche Nut auch am axialen Ende des Spaltrohrteils ausgebildet werden.

Gemäß einer bevorzugten Ausführungsform weist eine Pumpenanordnung eine Motoranordnung nach einem der vorhergehenden Ansprüche auf. Eine solche Pumpenanordnung kann durch die Motoranordnung gut abgedichtet werden. Hierbei muss der Bereich des Innenrotors nicht zum Bereich des Pumpenrads hin abgedichtet werden. Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen, sowie aus den Unteransprüchen. Es zeigt:
- Fig. 1: in einem Längsschnitt eine Motoranordnung nach einem nicht erfindungsgemäßen Beispiel,
- Fig. 2: ein Detail II von Fig. 1,
- Fig. 3: eine Seitenansicht einer Motoranordnung entsprechend der Erfindung,
- Fig. 4: eine Draufsicht auf die Motoranordnung von Fig. 3 entlang des Pfeils IV von Fig. 3,
- Fig. 5: in einer raumbildlichen Darstellung einen Teil der Motoranordnung von Fig. 1,
- Fig. 6: in einer raumbildlichen Darstellung die Motoranordnung entsprechend Fig. 5 mit einem Dichtelement,
- Fig. 7: einen Schnitt entlang der Schnittlinie VII - VII von Fig. 4,
- Fig. 8: ein Detail VIII von Fig. 7,
- Fig. 9: einen Schnitt entlang der Schnittlinie IX - IX von Fig. 4,
- Fig. 10: ein Detail X von Fig. 9,
- Fig. 11: in einem Detail entsprechend Fig. 8 eine weitere Ausführungsform einer Dichtung,
- Fig. 12: in einem Detail entsprechend Fig. 8 eine weitere Ausführungsform einer Dichtung,
- Fig. 13: in einem Längsschnitt eine weitere Ausführungsform der Motoranordnung, entsprechend der Erfindung, und
- Fig. 14: in einer raumbildlichen Darstellung die Motoranordnung von Fig. 13 vor der Montage.

Begriffe wie oben, unten, links und rechts beziehen sich im Folgenden auf die jeweilige Darstellung und können von Figur zu Figur unterschiedlich sein.

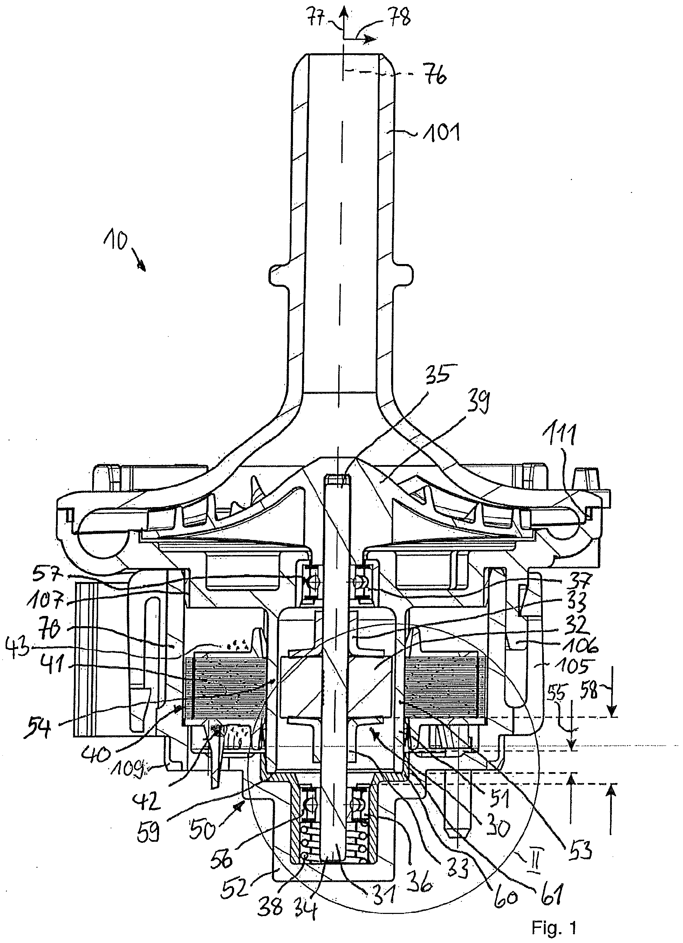

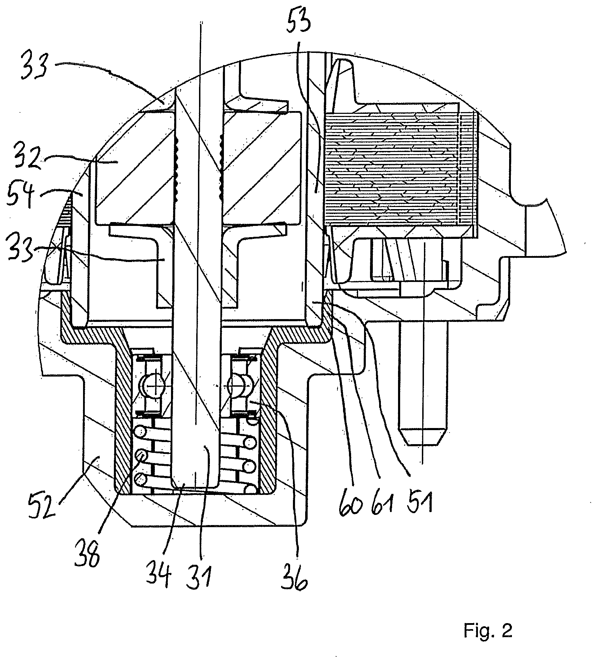

**Fig. 1** zeigt eine Pumpenanordnung 10 mit einer Motoranordnung 20, und **Fig. 2** zeigt das Detail II von Fig. 1. Die Motoranordnung 20 treibt über eine Welle 31 ein Pumpenrad 39 an, um eine Pumpwirkung zu erzielen.

Die Motoranordnung 20 hat einen Außenstator 40, eine Rotoranordnung 30, einen Spalttopf 50 und eine Lageranordnung 36, 37 mit einem ersten Lager 36 und einem zweiten Lager 37. Die Rotoranordnung 30 hat einen Innenrotor 32 und eine Welle 31. Durch die Drehung des Rotors 32 um eine durch die Lageranordnung 36, 37 vorgegebene Drehachse 76 wird eine axiale Richtung 77 und eine radiale Richtung 78 der Motoranordnung 20 definiert. Die Welle 31 hat ein erstes axiales Ende 34 und ein zweites axiales Ende 35.

Die Motoranordnung 20 hat einen magnetischen Luftspalt 53 zwischen dem Außenstator 40 und dem Innenrotor 32. Als Luftspalt (englisch: air gap) wird im Elektromaschinenbau im Rahmen magnetischer Kreise der Raum oder Abstand zwischen zwei gegenüberliegenden Flächen bezeichnet, welche einen magnetischen Fluss führen, im vorliegenden Fall der Raum zwischen dem Innenrotor 32 und dem Außenstator 40 der Motoranordnung 20. Der Luftspalt muss also nicht ein Bereich mit Luft sein, sondern er ist ein magnetisch schlecht leitender Raum, in dem Vakuum, Luft, Kunststoff oder ein anderes magnetisch schlecht bzw. nicht gut leitendes Material vorgesehen sein kann.

Der Außenstator 40 hat einen Statorkern 41, der beispielsweise als Blechpaket ausgebildet sein kann, und eine schematisch angedeutete Wicklungsanordnung 43.

Der Spalttopf 50 hat ein Spaltrohrteil 51 und ein Spalttopfbodenteil 52, er ist also mehrteilig aufgebaut. Das Spaltrohrteil 51 hat einen Spaltrohrbereich 54, welcher sich durch den magnetischen Luftspalt 53 erstreckt. Der Außenstator 40 ist um den Spaltrohrbereich 54 herum angeordnet. Anders ausgedrückt befindet sich der Außenstator 40 radial außerhalb des Spaltrohrbereichs 54.

Das Spaltrohrteil 51 und das Spalttopfbodenteil 52 überlappen sich in einem ersten vorgegebenen axialen Bereich 55, welcher erste vorgegebene axiale Bereich 55 durch zwei Pfeile angedeutet ist. Das Spaltrohrteil 51 und das Spalttopfbodenteil 52 erstrecken sich also beide in diesen ersten vorgegebenen axialen Bereich 55. In dem ersten vorgegebenen axialen Bereich 55 ist eine Dichtung 60 zwischen dem Spaltrohrteil 51 und dem Spalttopfbodenteil 52 in Form eines Dichtelements 61 vorgesehen. Im Ausführungsbeispiel ist das Spalttopfbodenteil 52 auf der Außenseite des Dichtelements 61 vorgesehen, und das Spaltrohrteil 51 auf der Innenseite des Dichtelements 61. Es ist jedoch auch möglich, das Spaltrohrteil 51 außerhalb und das Spalttopfbodenteil 52 innerhalb des Dichtelements 61 vorzusehen, oder das Spalttopfbodenteil 52 sowohl innerhalb als auch außerhalb des Spaltrohrteils 51 vorzusehen, oder umgekehrt.

Das Spalttopfbodenteil 52 hat einen ersten Lagersitz 56, in welchem das erste Lager 36 vorgesehen ist. Das erste Lager 36 ist durch ein Federelement 38 mit einer Kraft beaufschlagt. Alternativ kann auch das zweite Lager 37 durch ein Federelement mit einer Kraft beaufschlagt werden.

Das Vorsehen des ersten Lagersitzes 56 im Spalttopfbodenteil 52 hat den Vorteil, dass die Montage dadurch vereinfacht wird, dass das erste Lager 36 zusammen mit dem Spalttopfbodenteil 52 montiert werden kann. Zudem kann die Größe des Lagersitzes durch eine entsprechende Ausgestaltung des Spalttopfbodenteils 52 variiert werden.

Das Spaltrohrteil 51 hat bevorzugt einen zweiten Lagersitz 57, in welchem das zweite Lager 37 vorgesehen ist. Durch die mehrteilige Ausführung des Spalttopfs 50 kann das zweite Lager 37 von unten in das Spaltrohrteil 51 eingeführt werden, da dieses vor der Montage des Spalttopfbodenteils 52 ein offenes axiales Ende 59 hat. Anders ausgedrückt kann es vom axialen Ende 59 her eingeführt werden. Dies ist vorteilhaft gegenüber einem einteiligen Spalttopf, da bei einem einteiligen Spalttopf die obere Öffnung so groß sein muss, dass der Rotor eingeführt werden kann. Daher müssen entweder große zweite Lager verwendet werden, oder es müssen nach dem Einführen des Rotors 30 zusätzliche Teile montiert werden.

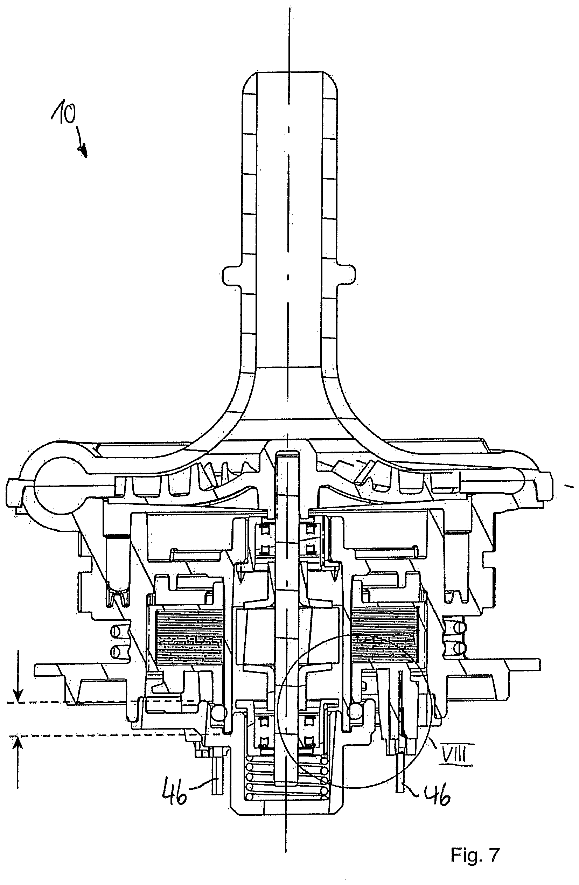

Das Spalttopfbodenteil 52 ist im ersten vorgegeben axialen Bereich 55 bevorzugt zumindest bereichsweise radial außerhalb des Spaltrohrteils 51 angeordnet. Dies ermöglicht eine vorteilhafte Ausgestaltung derart, dass das Spalttopfbodenteil 52 ebenfalls den äußeren Raum für den Außenstator 40 definiert. Wie beispielsweise in Fig. 7 zu sehen ist, kann zusätzlich ein anderer Bereich des Spalttopfbodenteils 52 radial innerhalb angeordnet sein. Es ist aber auch eine umgekehrte Lösung möglich.

Im Ausführungsbeispiel sind der Innenrotor 32 und das erste Lager 36 voneinander beabstandet, sodass ein zweiter axialer Bereich 58 zwischen dem Innenrotor 32 und dem ersten Lager 36 vorgesehen ist. Dies ermöglicht eine kurze Ausgestaltung des Spalttopfs 50.

Das Spaltrohrteil 51 hat einen ringförmigen Abschnitt 70, und bevorzugt ist der Außenstator 40 an seiner Außenfläche mit dem ringförmigen Abschnitt 70 verbunden. Diese Ausgestaltung ist vorteilhaft, da der Spaltrohrbereich 54 bevorzugt möglichst klein ausgebildet wird, um den magnetischen Widerstand klein zu halten. Der ringförmige Abschnitt 70 kann dagegen dicker ausgeführt werden, um eine sichere Befestigung des Außenstators 40 zu ermöglichen. Der ringförmige Abschnitt 70 kann alternativ als Bereich des Spaltrohrteils 51 ausgebildet werden, oder als zusätzliches Gehäuseteil.

Das Dichtelement 61 ist als mit dem Spalttopfbodenteil 52 verbundene Schicht aus einem elastomeren Werkstoff ausgebildet. Durch das Fügen des Spaltrohrteils 51 und des Spalttopfbodenteils 52 entsteht im ersten vorgegebenen axialen Bereich 55 eine Komprimierung bzw. Verpressung des Dichtelements 61.

Bei Anwendungen, bei denen bspw. ein Luft/Benzin-Gemisch durch die Pumpenanordnung 10 gefördert wird, ist eine Dichtigkeit im Bereich des Dichtelements 61 wichtig. Beim genannten Anwendungsfall wird jedoch von einer maximalen Druckdifferenz von 0,2 bar ausgegangen, und die geforderte Dichtigkeit konnte mit dem gezeigten Ausführungsbeispiel sicher erzielt werden. Die gezeigte Ausführungsform ist auch für höhere Druckunterschiede geeignet.

Das Spalttopfbodenteil 52 weist bevorzugt Kunststoff als Werkstoff auf, und es ist weiter bevorzugt aus Kunststoff ausgebildet. Das Dichtelement 61 wird bevorzugt aus einem elastomeren Werkstoff (Elastomer) ausgebildet. Die Herstellung des Dichtelements 61 kann bevorzugt mit Hilfe eines Spritzgussverfahrens erfolgen. Gut geeignet ist ein Mehrkomponentenverfahren, also im vorliegenden Ausführungsbeispiel ein 2K-Spritzgussverfahren. Bevorzugt wird als erstes das Spalttopfbodenteil 52 gespritzt, bspw. aus einem thermoplastischen Kunststoff, und anschließend wird was Dichtelement 61 angespritzt, bevorzugt aus einem elastomeren Werkstoff.

Die gezeigte Ausführungsform mit der Anbringung des Dichtelements 61 als Schicht auf dem Spalttopfbodenteil 52 hat den Vorteil, dass bei der Montage für diesen Bereich nur ein Bauteil benötigt wird.

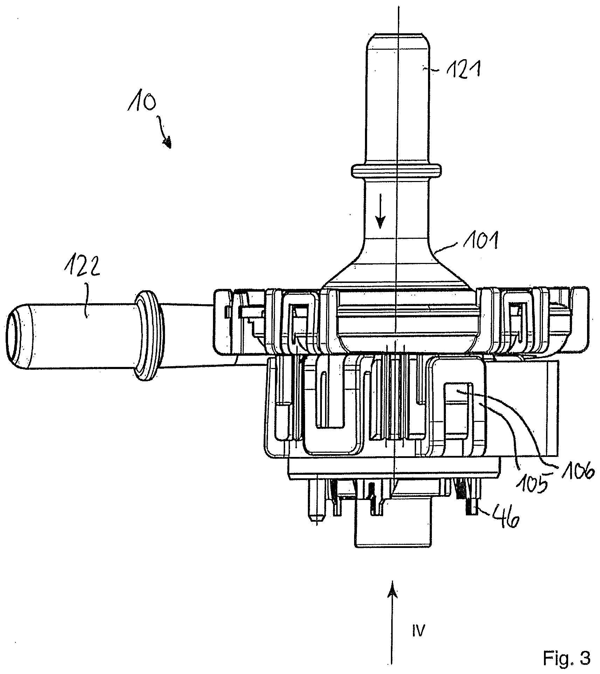

Fig. 3 zeigt ein zweites Ausführungsbeispiel der Pumpenanordnung 10 in einer Seitenansicht von außen. Der Pumpendeckel 101 hat einen Einlass 121 und einen Auslass 122.

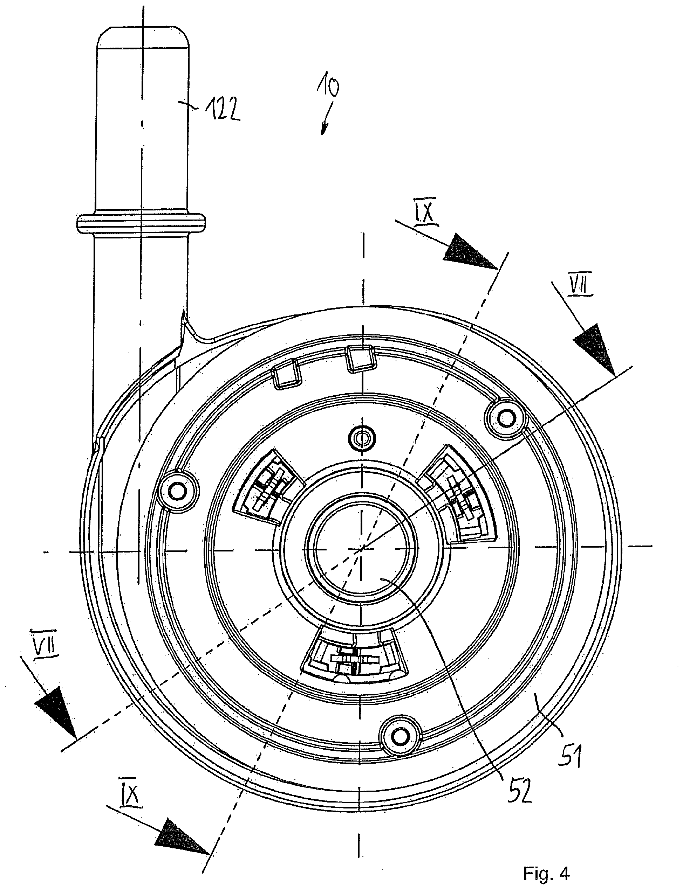

Fig. 4 zeigt eine Draufsicht auf die Pumpenanordnung 10 von Fig. 3 entlang des Pfeils IV von Fig. 3.

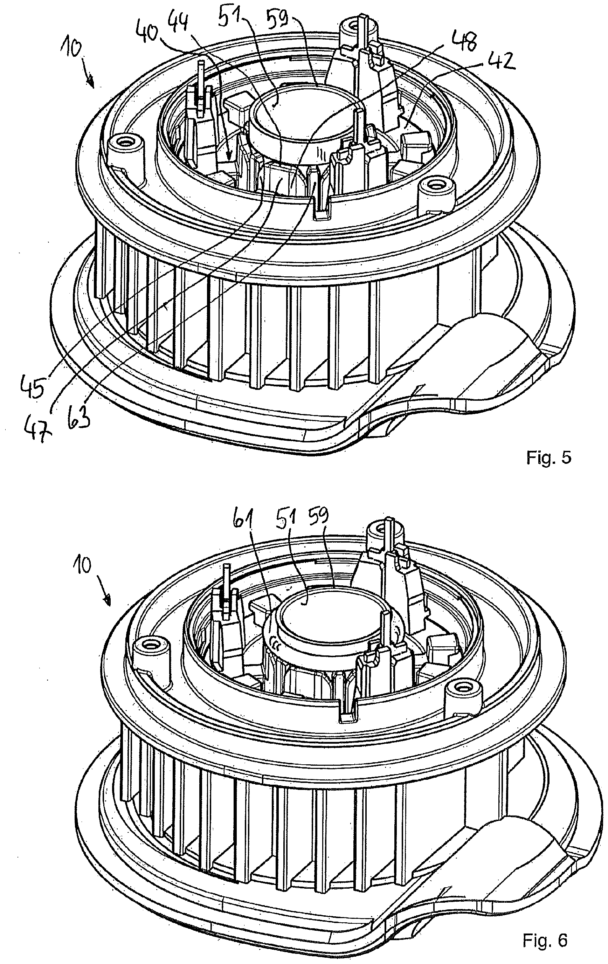

Fig. 5 zeigt eine schräge Detailansicht der Pumpenanordnung 10 von Fig. 3, jedoch ohne das Spalttopfbodenteil 52 und ohne die Rotoranordnung 30. Der Außenstator 40 hat Statorpole 47, die auch als ausgeprägte Statorpole 47 bezeichnet werden können. Die Statorpole 47 haben Statorpolköpfe 48. Das Spaltrohrteil 51 hat an der Außenfläche, also an der Außenseite der Mantelfläche, Spaltrohrteilvorsprünge 63. Das Formteil 42 hat eine Mehrzahl von Formteilvorsprüngen 44, die sich zum axialen Ende 59 des Spaltrohrteils 51 hin bis in dessen Nähe erstrecken.

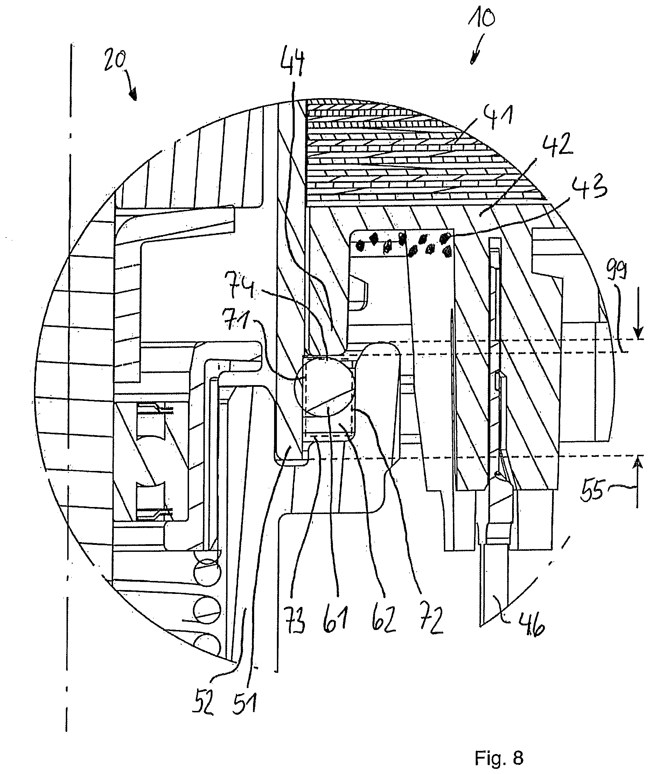

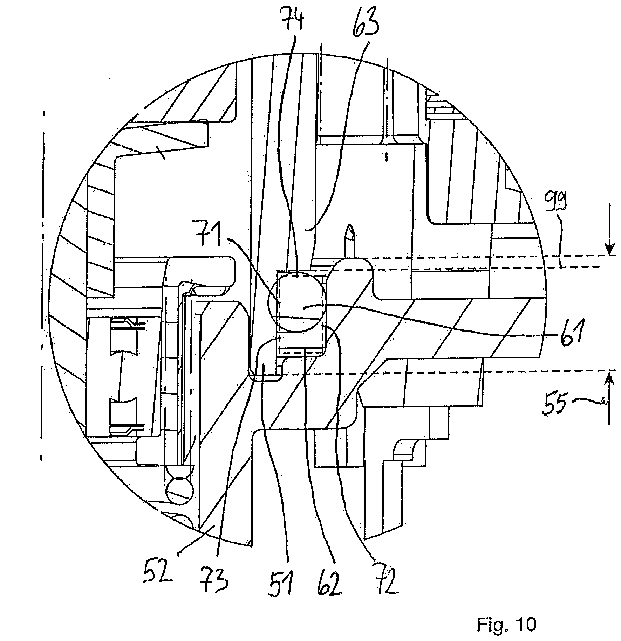

Die Formteilvorsprünge 44 und die Spaltrohrteilvorsprünge 63 definieren bevorzugt eine gemeinsame Ebene 99 in der Nähe des axialen Endes 59 des Spaltrohrteils 51, vgl. Fig. 8 und Fig. 10. Kleine Abweichungen oder Herstellungstoleranzen sind jedoch unkritisch.

Die Formteilvorsprünge 44 sind bevorzugt derart angeordnet, dass die Statornuten 45, insbesondere die Statornuten 45 im Bereich zwischen den Statorpolköpfen 48, bei der Montage von den Formteilvorsprüngen 44 geführt und damit positioniert werden können.

Bevorzugt sind die Spaltrohrteilvorsprünge 63 als Rippen ausgebildet, die sich in axialer Richtung bis in den Bereich der Statornuten 45 erstreckt. Hierdurch kann eine Ausrichtung des Außenstators 40 relativ zum Spaltrohrteil 51 auch nach der Montage erzielt werden.

**Fig. 6** zeigt eine Detailansicht entsprechend Fig. 5, wobei zusätzlich ein Dichtelement 61 in Form eines Dichtrings auf dem Spaltrohrteil 51 angeordnet ist. Das Aufschieben des Dichtelements 61 wird im Ausführungsbeispiel von den Formteilvorsprüngen 44 und den Spaltrohrteilvorsprüngen axial 63 begrenzt, und das Dichtglied 61 liegt bevorzugt sowohl gegen die Spaltrohrteilvorsprünge 63 als auch gegen die Formteilvorsprünge 44 an.

**Fig. 7** zeigt einen Längsschnitt durch die Pumpenanordnung 10 von Fig. 3 entlang der Schnittlinie VI - VI von Fig. 4.

**Fig. 8** zeigt das Detail VIII von Fig. 7. Im ersten vorgegebenen axialen Bereich 55, in dem das Spaltrohrteil 51 und das Spalttopfbodenteil 52 sich überlappen, ist ein Dichtelementraum 62 definiert. Der Dichtelementraum 62 ist durch eine gestrichelte Linie dargestellt. Der Dichtelementraum 62 ist radial innen (71) bereichsweise oder vollständig durch das Spaltrohrteil 51 definiert, radial außen (72) bereichsweise oder vollständig durch das Spalttopfbodenteil 52 definiert, auf einer ersten axialen Seite 73 bereichsweise oder vollständig durch das Spalttopfbodenteil 52 definiert und auf einer der ersten axialen Seite 73 gegenüberliegenden zweiten axialen Seite 74 bereichsweise oder vollständig durch den Formteilvorsprung 44 definiert.

Das Dichtelement 61 ist im Dichtelementraum 62 angeordnet, wobei es in seiner Ursprungsform dargestellt ist, also vor dem Aufschieben auf das Spaltrohrteil 51 und vor der Montage des Spalttopfbodens 52. Der Dichtelementraum 62 muss nicht vollständig auf allen Seiten 71, 72, 73, 74 definiert sein, sondern es reicht beispielsweise aus, wenn Lücken vorhanden sind, diese aber so gering sind, dass das Dichtelement 61 nicht aus dem Dichtelementraum 62 heraus bewegt werden kann.

Wie zu sehen ist, hat das Dichtelement 61 bevorzugt in der Ursprungsform eine größere radiale Erstreckung als die radiale Erstreckung zwischen den Seiten 71, 72 des Dichtelementraums 62. Hierdurch wird das Dichtelement 61 bei der Montage im Dichtelementraum 62 verpresst, und dies führt zu einer besseren Dichtigkeit zwischen dem Spaltrohrteil 51 und dem Spalttopfbodenteil 52.

Das Formteil 42, wie es dargestellt ist, kann als Statorendscheibe oder als Statorumspritzung ausgebildet werden. Bei der Ausgestaltung als Statorendscheibe kann das Formteil 42 hergestellt und anschließend auf den Statorkern aufgeschoben werden. Bei der Ausgestaltung als Statorumspritzung wird bevorzugt der Statorkern ganz oder teilweise mit einem Kunststoff umspritzt und hierdurch das Formteil 42 ausgebildet.

Das Formteil 42 ist bevorzugt zusätzlich als Isolierkörper ausgebildet, auf den die schematisch angedeutete Wicklungsanordnung 43 zumindest bereichsweise gewickelt ist. Es befindet sich also zumindest bereichsweise zwischen der Wicklungsanordnung 43 und dem Statorkern 41. Bevorzugt ist das Formteil 42 zusätzlich als Träger für einen Wicklungsanschluss 46 ausgebildet, bspw. für einen Stift.

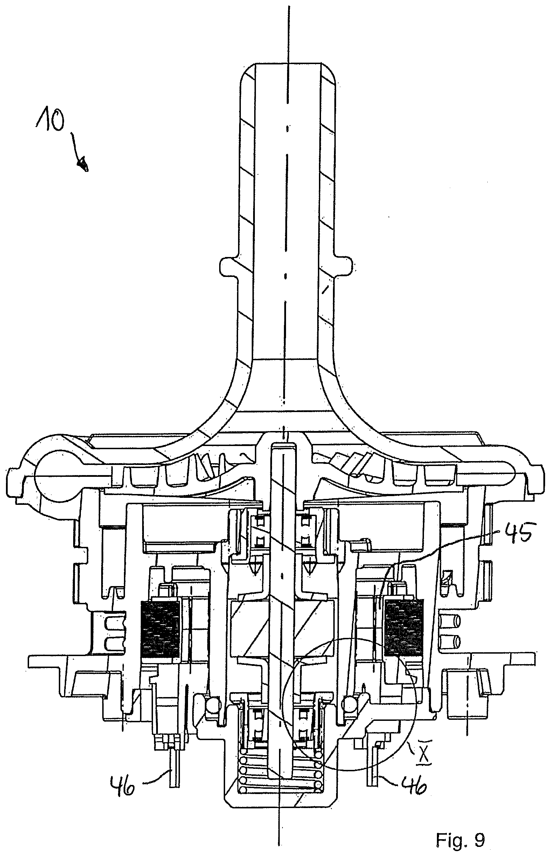

**Fig. 9** zeigt einen Längsschnitt durch die Pumpenanordnung 10 von Fig. 3 entlang der Schnittlinie VIII - VIII von Fig. 4.

**Fig. 10** zeigt das Detail X von Fig. 9. Im ersten vorgegebenen axialen Bereich 55, in dem das Spaltrohrteil 51 und das Spalttopfbodenteil 52 sich überlappen, ist wie in Fig. 8 der Dichtelementraum 62 definiert. Der Dichtelementraum 62 ist durch eine gestrichelte Linie dargestellt. Der Dichtelementraum 62 ist radial innen (71) bereichsweise oder vollständig durch das Spaltrohrteil 51 definiert, radial außen (72) bereichsweise oder vollständig durch das Spalttopfbodenteil 52 definiert, auf einer ersten axialen Seite 73 bereichsweise oder vollständig durch das Spalttopfbodenteil 52 definiert und auf einer der ersten axialen Seite 73 gegenüberliegenden zweiten axialen Seite 74 bereichsweise oder vollständig durch den Spaltrohrteilvorsprung 63 definiert.

Das Dichtelement 61 ist wie in Fig. 8 im Dichtelementraum 62 angeordnet, und es gelten die Ausführungen zu Fig. 8.

Besonders an der Ausführungsform ist, dass der Dichtelementraum 62 auf der axialen Seite 74 in Umfangsrichtung bereichsweise durch die Formteilvorsprünge 44 (Fig. 8) und bereichsweise durch die Spaltrohrteilvorsprünge 63 (Fig. 10) definiert wird.

Wenn der Dichtelementraum 62 dagegen beispielsweise nur durch die Formteilvorsprünge 44 definiert wäre, könnte das Dichtelement 61 in den Lücken zwischen den Formteilvorsprüngen 44 aus dem Dichtelementraum heraus gepresst werden, und die Abdichtung wäre möglicherweise schlecht, da das zu fördernde Fluid aus dem Pumpenraum bzw. Rotorraum hinaus strömen könnte.

Das Dichtelement 61 ist im Ausführungsbeispiel als Dichtring ausgebildet, genauer definiert als O-Ring mit rundem Querschnitt in der Ursprungsform. Alternativ ist auch eine Ausbildung als X-Ring mit X-förmigem Querschnitt oder als V-Ring mit V-förmigem Querschnitt möglich.

Auch beim Ausführungsbeispiel der Fig. 3 bis Fig. 9 könnte die Abdichtung zwischen dem Spaltrohrteil 51 und dem Spalttopfbodenteil 52 durch eine Ausgestaltung mit dem Dichtelement 61 gemäß Fig. 1 erfolgen.

Bei der Ausführungsform der Fig. 3 bis Fig. 9 ist anders als bei der Ausführungsform der Fig. 1 der ringförmige Abschnitt 70 als Abschnitt des Spaltrohrteils 51 ausgebildet. Bevorzugt ist der Außenstator 40 mit seiner Außenseite im ringförmigen Abschnitt 70 verpresst. Es kann aber auch eine andere Befestigung erfolgen, beispielsweise durch Verkleben oder Verschweißen. Diese Varianten haben den Vorteil, dass kein zusätzliches Bauteil als Dichtung vorgesehen sein muss. Man spricht von einer stoffschlüssigen Verbindung.

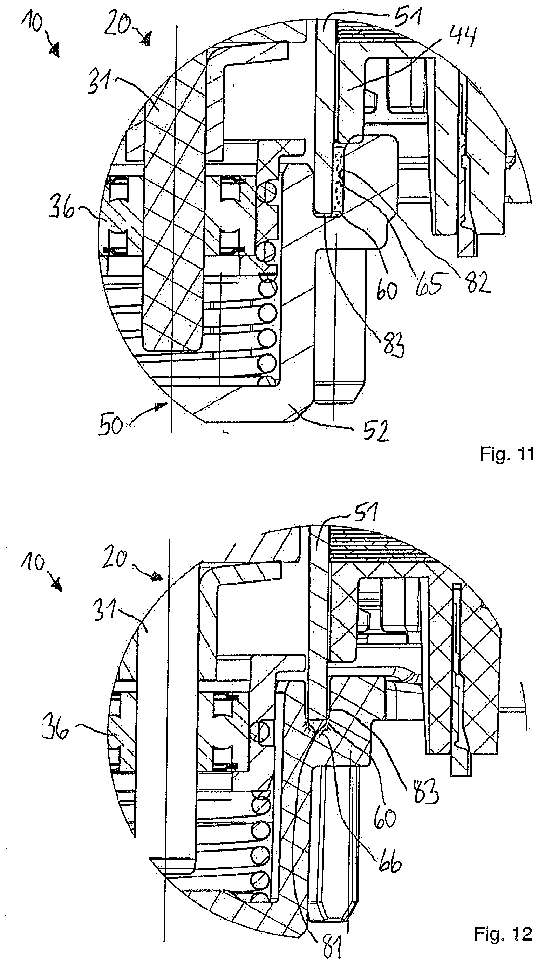

**Fig. 11** zeigt ein Detail des Bereichs zwischen dem Spaltrohrteil 51 und dem Spalttopfbodenteil 52 entsprechend dem Ausschnitt von Fig. 8. Dargestellt ist eine Klebeverbindung 65 mit einem Klebstoff, beispielsweise einem physikalisch abbindenden Klebstoff oder einem chemisch härtenden Klebstoff. Besonders geeignet sind harzbasierte Klebstoffe. Der Klebstoff bildet eine Dichtung zwischen den beiden Teilen 51, 52.

Bevorzugt ist zwischen dem Spaltrohrteil 51 und dem Spalttopfbodenteil 52 zumindest bereichweise ein Spalt 82 vorgesehen, um einen Raum für den Klebstoff bereitzustellen. Hierzu ist bevorzugt eine axiale Überlappung zwischen dem Spaltrohrteil 51 und dem Spalttopfbodenteil 52 vorgesehen. Die axiale Überlappung kann - wie auch bei den übrigen Ausführungsbeispielen - innen, außen, oder innen und außen vorgesehen werden.

Bevorzugt bildet das Spalttopfbodenteil 52 zumindest bereichsweise eine Nut 83 aus, in die das Spaltrohrteil 51 eingreifen kann. Hierdurch kann der Klebstoff für die Klebstoffverbindung 65 in der Nut 83 angebracht werden, bevor das Spaltrohrteil 51 in die Nut 83 eingeführt wird. Weiter bevorzugt ist der Spalt 82 auf der radial äußeren Seite des Spaltrohrteils 51 vorgesehen. Hierdurch wird der Klebstoff hauptsächlich nach außen verdrängt, und die Gefahr einer Verunreinigung des Raums für die Welle 31 wird verringert.

**Fig. 12** zeigt eine weitere Dichtung zwischen dem Spaltrohrteil 51 und dem Spalttopfbodenteil 52 in Form einer Schweißverbindung 66. Bevorzugt wird die Schweißverbindung durch Ultraschallschweißen erzeugt, es sind aber auch andere wärmeerzeugende Verfahren möglich.

Es ist wie in Fig. 11 und in Fig. 8 eine Nut 83 vorgesehen, in die sich das Spaltrohrteil 51 erstreckt. Das Spaltrohrteil 51 weist bevorzugt an seinem dem Spalttopfbodenteil zugewandten Ende eine Spitze 81 auf, an der beim Ultraschallschweißen mit Hilfe einer durch eine Sonotrode erzeugten Schwingung Wärme erzeugt wird, die zu einem Aufschmelzen in diesem Bereich mit der Spitze 81 führt, da dort eine linienförmige oder punktförmige Berührung der Bauteile 51, 52 vorliegt. Das verdrängte Volumen findet in der Nut 83 Platz und tritt so nicht in den Innenraum der Motoranordnung 20 aus. Ein bevorzugter Werkstoff für das Spalttopfbodenteil 52 ist im Zusammenhang mit Ultraschallschweißen ein thermoplastischer Kunststoff.

Nach dem Abschmelzen der beteiligten Kunststoffe sind beide Bauteile 51, 52 vergleichsweise dicht und mechanisch belastbar miteinander verbunden. Der Gesamtschweißweg, also der Weg, den die beiden Bauteile 51, 52 beim Schweißen zusammen geschoben werden, beträgt beispielsweise ca. 0,6 mm. In der Darstellung sind die Bauteile 51, 52 in der Endstellung dargestellt, in der sie ineinander tauchen.

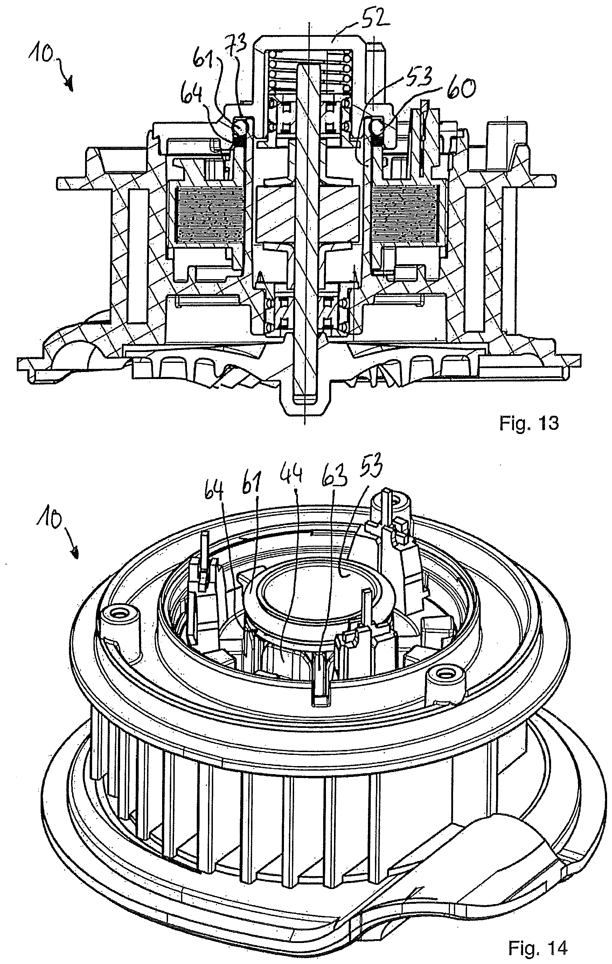

**Fig. 13** zeigt in einem Längsschnitt ein weiteres Ausführungsbeispiel der Pumpenanordnung 10, und **Fig. 14** in einer raumbildlichen Darstellung das Ausführungsbeispiel von Fig. 13.

Wie bei den Ausführungsbeispielen von Fig. 5 bis Fig. 10 wird die Dichtung 60 zwischen dem Spaltrohrteil 51 und dem Spalttopfbodenteil 52 durch ein Dichtelement 61 ausgebildet, insbesondere durch einen O-Ring. Der Dichtelementraum 62 (vgl. Fig. 8) wird zusätzlich durch einen Stützring 64 begrenzt. Der Stützring 64 dient dazu, den axialen Druck auf das Dichtelement 61 gleichmäßiger zu verteilen. Dies kann beispielsweise vorteilhaft sein, wenn keine Spaltrohrteilvorsprünge 63 (vgl. Fig. 10) vorgesehen sind, oder wenn die Formteilvorsprünge 44 (vgl. Fig. 8) nicht bis zum Dichtelementraum 62 verlängert werden können. Durch den Stützring kann die Abdichtwirkung der Dichtung 60 verbessert werden, und die Abdichtwirkung kann auch bei einer höheren Druckdifferenz zwischen dem Innenraum und dem Außenraum sichergestellt werden.

Zur Montage kann beispielsweise nach der Montage des Stators 40 der Stützring 64 auf das Spaltrohrteil 51 aufgeschoben werden. Der Stützring 64 kann sich dabei beispielsweise gegen die Formteilvorsprünge 44 (vgl. Fig. 8) oder gegen die Spaltrohrteilvorsprünge 63 (vgl. Fig. 10) oder gegen beide Vorsprünge abstützen. Anschließend wird das Dichtelement 61 auf das Spaltrohrteil 51 aufgeschoben.

Naturgemäß sind im Rahmen der Erfindung Abwandlungen und Modifikationen möglich.

Als Ausführungsbeispiel wurde eine Pumpenanordnung 10 gezeigt. Die Erfindung ist aber beispielsweise auch für einen Lüfter oder als Antrieb für eine andere Applikation einsetzbar.

**Bezugszeichenliste**

| | | | |
|---|---|---|---|
| 10 | Pumpenanordnung | 57 | zweiter Lagersitz |
| 20 | Motoranordnung | 58 | zweiter vorgegebener axialer Be-reich |
| 30 | Rotoranordnung | | |
| 31 | Welle | 59 | axiales Ende des Spaltrohrteils |
| 32 | (permanentmagnetischer) Innenrotor | 60 | Dichtung |
| | | 61 | Dichtelement |
| 33 | Halteelemente | 62 | Dichtelementraum |
| 34 | erstes axiales Ende | 63 | Spaltrohrteilvorsprünge |
| 35 | zweites axiales Ende | 64 | Stützring |
| 36 | erstes Lager | 65 | Klebeverbindung |
| 37 | zweites Lager | 66 | Schweißverbindung |
| 38 | Federelement | 70 | ringförmiger Abschnitt |
| 39 | Pumpenrad | 71 | Dichtelementraum radial innen |
| 40 | Außenstator | 72 | Dichtelementraum radial außen |
| 41 | Statorkern | 73 | Dichtelementraum erste axiale Seite |
| 42 | Formteil | | |
| 43 | Wicklungsanordnung | 74 | Dichtelementraum zweite axiale Seite |
| 44 | Formteilvorsprünge | | |
| 45 | Statornut | 77 | axiale Richtung |
| 46 | Wicklungsanschluss | 78 | radiale Richtung |
| 47 | Statorpole | 81 | Spitze am Spaltrohrteil |
| 48 | Statorpolköpfe | 82 | Spalt |
| 50 | Spalttopf | 83 | Nut |
| 51 | Spaltrohrteil | 101 | Pumpendeckel |
| 52 | Spalttopfbodenteil | 105 | Rastelement |
| 53 | magnetischer Luftspalt | 106 | Vorsprung |
| 54 | Spaltrohrbereich | 107 | Dichtelement |
| 55 | erster vorgegebener axialer Bereich 111 | 109 | Dichtelement |
| | | 111 | Dichtelement |
| 56 | erster Lagersitz | | |

## Patentansprüche

1. Motoranordnung (20) mit einem Außenstator (40), einer Rotoranordnung (30), einem Spalttopf (50) und einer Lageranordnung (36, 37) mit einem ersten Lager (36) und einem zweiten Lager (37),
welche Rotoranordnung (30) einen Innenrotor (32) und eine Welle (31) aufweist und eine axiale Richtung (77) und eine radiale Richtung (78) der Motoranordnung (20) definiert,
welche Motoranordnung (20) einen magnetischen Luftspalt (53) zwischen dem Außenstator (40) und dem Innenrotor (32) aufweist,
welcher Spalttopf (50) ein Spaltrohrteil (51) und ein Spalttopfbodenteil (52) aufweist,
welches Spaltrohrteil (51) einen Spaltrohrbereich (54) aufweist, welcher Spaltrohrbereich (54) sich durch den magnetischen Luftspalt (53) erstreckt, welcher Außenstator (40) um den Spaltrohrbereich (54) herum angeordnet ist,
welches Spaltrohrteil (51) und welches Spalttopfbodenteil (52) sich in einem ersten vorgegebenen axialen Bereich (55) überlappen,
wobei im ersten vorgegebenen axialen Bereich (55) eine Dichtung (60) zwischen dem Spaltrohrteil (51) und dem Spalttopfbodenteil (52) vorgesehen ist, bei welcher die Dichtung (60) ein Dichtelement (61) aufweist,
bei welcher das Spaltrohrteil (51) an der Außenfläche Spaltrohrteilvorsprünge (63) aufweist,
bei welcher der Außenstator (40) einen Statorkern (41), eine Wicklungsanordnung (43) und ein Formteil (42) aufweist,
welches Formteil (42) eine Mehrzahl von Formteilvorsprüngen (44) aufweist, und welche Motoranordnung (20) im ersten vorgegebenen axialen Bereich (55) einen Dichtelementraum (62) definiert,
welcher Dichtelementraum (62)
- radial innen (71) zumindest bereichsweise durch das Spaltrohrteil (51) radial innen definiert ist,
- radial außen (72) zumindest bereichsweise durch das Spalttopfbodenteil (52) radial außen definiert ist,
- auf einer ersten axialen Seite (73) zumindest bereichsweise durch das Spalttopfbodenteil (52) definiert ist, und
- auf einer der ersten axialen Seite (73) gegenüber liegenden zweiten axialen Seite (74) zumindest bereichsweise durch die Formteilvorsprünge (44) definiert ist,
wobei im Dichtelementraum (62) das Dichtelement (61) angeordnet ist.

2. Motoranordnung (20) nach Anspruch 1, bei welcher das Spalttopfbodenteil (52) einen ersten Lagersitz (56) aufweist, in welchem ersten Lagersitz (56) das erste Lager (36) vorgesehen ist und bei welcher das Spaltrohrteil (51) einen zweiten Lagersitz (57) aufweist, in welchem zweiten Lagersitz (57) das zweite Lager (37) vorgesehen ist.

3. Motoranordnung (20) nach einem der vorhergehenden Ansprüche, bei welcher das Spalttopfbodenteil (52) im ersten vorgegebenen axialen Bereich (55) zumindest bereichsweise radial außerhalb des Spaltrohrteils (51) angeordnet ist.

4. Motoranordnung (20) nach einem der vorhergehenden Ansprüche,
bei welcher der Innenrotor (32) und das erste Lager (36) voneinander beabstandet sind, so dass ein zweiter axiale Bereich (58) zwischen dem Innenrotor (32) und dem ersten Lager (36) vorgesehen ist,
und bei welcher der erste vorgegebene axiale Bereich (55) in axialer Richtung (77) teilweise oder vollständig im zweiten vorgegebenen axialen Bereich (58) vorgesehen ist.

5. Motoranordnung (20) nach einem der vorhergehenden Ansprüche,
bei welcher das Spaltrohrteil (51) ein dem Spalttopfbodenteil (52) zugewandtes axiales Ende (59) aufweist,
und bei welcher sich die Rotoranordnung (30) auf beidenaxialen Seitendes axialen Endes (59) erstreckt.

6. Motoranordnung (20) nach einem der vorhergehenden Ansprüche, bei welcher das Spaltrohrteil (51) oder das Spalttopfbodenteil (52) einen ringförmigen Abschnitt (70) aufweist, wobei der Außenstator (40) an seiner Außenfläche mit dem ringförmigen Abschnitt (70) verbunden ist.

7. Motoranordnung (20) nach einem der vorhergehenden Ansprüche, bei welcher die Dichtung (60) ein Dichtelement (61) aufweist, welches als mit dem Spalttopfbodenteil (52) verbundene Schicht aus einem elastomeren Werkstoff ausgebildet ist.

8. Motoranordnung (20) nach Anspruch 1, bei welcher das Dichtelement (61) einen Dichtring aufweist.

9. Motoranordnung (20) nach einem der Ansprüche 1 bis 8, bei welcher das Dichtelement (61) einen Stützring (64) und einen Dichtring (61) aufweist, wobei der Stützring (64) an der zweiten axialen Seite (74) des Dichtelementraums (62) zumindest bereichsweise gegen die Spaltrohrteilvorsprünge (63) oder zumindest bereichsweise gegen die Formteilvorsprünge (44) anliegt, und wobei der Dichtring (61) zwischen dem Stützring (64) und der ersten axialen Seite (73) des Dichtelementraums (62) angeordnet ist.

10. Motoranordnung (20) nach einem der Ansprüche 1 bis 9, bei welcher das Dichtelement (61) zumindest bereichsweise in radialer Richtung im Dichtelementraum (62) verpresst ist.

11. Motoranordnung (20) nach einem der Ansprüche 1 bis 10, bei welcher das Formteil (42) als Statorendscheibe oder als Statorumspritzung ausgebildet ist.

12. Motoranordnung (20) nach einem der Ansprüche 1 bis 11, bei welcher das Formteil (42) zusätzlich als Isolierkörper ausgebildet ist, auf dem die Wicklungsanordnung (43) zumindest bereichsweise gewickelt ist.

13. Motoranordnung (20) nach einem der Ansprüche 1 bis 12, bei welcher das Formteil (42) als Träger für einen Wicklungsanschluss (46) ausgebildet ist.

14. Motoranordnung (20) nach einem der Ansprüche 1 bis 13, bei welcher der Außenstator (40) auf der Innenfläche Statornuten (45) aufweist, welche Statornuten (45) dazu ausgebildet sind, bei der Montage der Motoranordnung (20) ein Aufschieben des Außenstators (40) auf das Spaltrohrteil (51) unter Bewegung der Spaltrohrteilvorsprünge (63) in den Statornuten (45) zu ermöglichen.

15. Motoranordnung (20) nach Anspruch 14, bei welcher die Spaltrohrteilvorsprünge (63) als Rippen ausgebildet sind und sich in axialer Richtung bis in den Bereich der Statornuten (45) erstrecken, um hierdurch eine Ausrichtung des Außenstators (40) relativ zum Spaltrohrteil (51) zu ermöglichen.

16. Motoranordnung nach Anspruch 15, bei welcher in jeder Statornut (45) ein Spaltrohrteilvorsprung (63) zumindest bereichsweise angeordnet ist.

17. Motoranordnung (20) nach einem der Ansprüche 14 bis 16, bei welcher der Außenstator (40) ausgeprägte Statorpole (47) mit Statorpolköpfen (48) aufweist, und bei welcher die Spaltrohrteilvorsprünge (63) in den Bereich der Statornuten (45) zwischen den Statorpolköpfen (48) eingreifen.

18. Motoranordnung (20) nach einem der vorhergehenden Ansprüche, bei welcher das Spalttopfbodenteil (52) zumindest bereichsweise eine Nut (83) ausbildet, in welche Nut (83) das Spaltrohrteil (51) eingreift, wobei die Nut (83) insbesondere als umlaufende Nut (83) ausgebildet ist.

## Claims

1. A motor assembly (20) having an outer stator (40), a rotor assembly (30), a separating can (50), and a bearing assembly (36, 37) with a first bearing (36) and a second bearing (37),
which rotor assembly (30) has an inner rotor (32) and a shaft (31) and defines an axial direction (77) and a radial direction (78) of the motor assembly (20),
which motor assembly (20) has a magnetic air gap (53) between the outer stator (40) and the inner rotor (32), which separating can (50) has a split tube section (51) and a separating can base part (52),
which split tube section (51) has a split tube region (54), which split tube region (54) extends through the magnetic air gap (53), which outer stator (40) is disposed about the split tube region (54),
which split tube section (51) and which separating can base part (52) overlap in a first predefined axial region (55),
wherein a seal (60) is provided in the first predefined axial region (55) between the split tube section (51) and the separating can base part (52),
wherein the seal (60) has a sealing member (61),
wherein the split tube section (51) has split tube section projections (63) on its outer surface,
wherein the outer stator (40) has a stator core (41), a winding assembly (43), and a molded part (42),
which molded part (42) has a plurality of molded part projections (44),
and which motor assembly (20) defines a sealing member space (62) in the first predefined axial region (55),
which sealing member space (62)
- is radially inwards (71) at least in sections defined by the split tube section (51) radially inwards,
- is radially outwards (72) at least in sections defined by the separating can base part (52) radially outwards,
- is at least in sections defined on a first axial side (73) by the separating can base part (52), and
- is at least in sections defined on a second axial side (74) situated opposite the first axial side (73) by the split tube section projections (63) or at least in sections by the molded part projections (44),
wherein the sealing member (61) is disposed in the sealing member space (62).

2. The motor assembly (20) according to claim 1, wherein the separating can base part (52) has a first bearing seat (56), in which first bearing seat (56) the first bearing (36) is provided and wherein the split tube section (51) has a second bearing seat (57), in which second bearing seat (57) the second bearing (37) is provided.

3. The motor assembly (20) according to any one of the preceding claims, wherein the separating can base part (52) is disposed in a first predefined axial region (55) at least partially radially outside the split tube section (51).

4. The motor assembly (20) according to any one of the preceding claims, wherein the inner rotor (32) and the first bearing (36) are spaced apart from each other, such that a second axial region (58) is provided between the inner rotor (32) and the first bearing (36), and wherein the first predefined axial region (55) is - in the axial direction (77) - completely or partially provided in the second predefined axial region (58).

5. The motor assembly (20) according to any one of the preceding claims, wherein the split tube section (51) has an axial end (59) facing the separating can base part (52),
and wherein the rotor assembly (30) extends on both axial sides of the axial end (59).

6. The motor assembly (20) according to any one of the preceding claims, wherein the split tube section (51) or the separating can base part (52) has an annular section (70), wherein the outer surface of the outer stator (40) is connected to the annular section (70).

7. The motor assembly (20) according to any one of the preceding claims, wherein the seal (60) comprises a sealing member (61) which is formed as a layer of an elastomeric material connected to the separating can base part (52).

8. The motor assembly (20) according to claim 1, wherein the sealing member (61) comprises a sealing ring.

9. The motor assembly (20) according to any one of claims 1 to 8, wherein the sealing member (61) has a support ring (64) and a sealing ring (61), wherein the support ring (64) adjoins the split tube section projections (63) or molded part projections (44) at least in sections on the second axial side (74) of the sealing member space (62), and wherein the sealing ring (61) is disposed between the support ring (64) and the first axial side (73) of the sealing member space (62).

10. The motor assembly (20) according to any one of claims 1 to 9, wherein the sealing member (61) is pressed in the radial direction into the sealing member space (62) at least in sections.

11. The motor assembly (20) according to any one of claims 1 to 10, wherein the molded part (42) is configured as a stator end disk or as a stator encapsulation.

12. The motor assembly (20) according to any one of claims 1 to 11, wherein the molded part (42) is additionally configured as an insulating body, at least onto sections of which the winding assembly (43) is wound.

13. The motor assembly (20) according to any one of claims 1 to 12, wherein the molded part (42) is configured as a substrate for a winding connection (46).

14. The motor assembly (20) according to any one of claims 1 to 13, wherein the outer stator (40) has stator grooves (45) on its inner surface, which stator grooves (45) are configured to allow sliding the outer stator (40) onto the split tube section (51) by moving the split tube section projections (63) in the stator grooves (45) during assembly of the motor assembly (20).

15. The motor assembly (20) according to claim 14, wherein the split tube section projections (63) are formed as ribs and extend in the axial direction into the region of the stator grooves (45) to allow alignment of the outer stator (40) relative to the split tube section (51).

16. The motor assembly according to claim 15, wherein a split tube section projection (63) is disposed at least in sections in each stator groove (45).

17. The motor assembly (20) according to any one of claims 14 to 16, wherein the outer stator (40) has pronounced stator poles (47) with stator pole heads (48), and wherein the split tube section projections (63) engage in the region of the stator grooves (45) between the stator pole heads (48).

18. The motor assembly (20) according to any one of the preceding claims, wherein the separating can base part (52) forms a groove (83) at least in sections, which groove (83) engages in the split tube section (51), wherein the groove (83) is preferably configured as a circumferential groove (83).

## Revendications

1. Ensemble moteur (20) comprenant un stator extérieur (40), un ensemble rotor (30), une chemise d'entrefer (50) et un ensemble de paliers (36, 37) pourvu d'un premier palier (36) et d'un deuxième palier (37),
ledit ensemble rotor (30) présente un rotor intérieur (32) et un arbre (31) et définit une direction axiale (77) et une direction radiale (78) de l'ensemble moteur (20),
ledit ensemble moteur (20) présente un entrefer magnétique (53) entre le stator extérieur (40) et le rotor intérieur (32),
ladite chemise d'entrefer (50) présente une partie gaine (51) et une partie fond de chemise d'entrefer (52),
ladite partie gaine (51) présente une zone de gaine (54), ladite zone de gaine (54) s'étend à travers l'entrefer magnétique (53), ledit stator extérieur (40) est disposé autour de la zone de gaine (54),
ladite partie gaine (51) et ladite partie fond de chemise d'entrefer (52) se chevauchent dans une première zone axiale prédéfinie (55),
dans lequel, dans la première zone axiale prédéfinie (55), un joint d'étanchéité (60) est prévu entre la partie gaine (51) et la partie fond de chemise d'entrefer (52), le joint d'étanchéité (60) présentant un élément d'étanchéité (61),
la partie gaine (51) présentant des saillies de partie gaine (63) sur la surface extérieure,
le stator extérieur (40) présentant un noyau de stator (41), un ensemble de bobinage (43) et une pièce moulée (42),
ladite pièce moulée (42) présente une pluralité de saillies de pièce moulée (44), et ledit ensemble moteur (20) définit dans la première zone axiale prédéfinie (55) un espace d'élément d'étanchéité (62),
ledit espace d'élément d'étanchéité (62) est défini
- radialement à l'intérieur (71) au moins par endroits par la partie gaine (51) radialement à l'intérieur,
- radialement à l'extérieur (72) au moins par endroits par la partie fond de chemise d'entrefer (52) radialement à l'extérieur,
- sur un premier côté axial (73) au moins par endroits par la partie fond de chemise d'entrefer (52), et
- sur un deuxième côté axial (74) opposé au premier côté axial (73) au moins par endroits par les saillies de pièce moulée (44),
l'élément d'étanchéité (61) étant disposé dans l'espace d'élément d'étanchéité (62).

2. Ensemble moteur (20) selon la revendication 1, dans lequel la partie fond de chemise d'entrefer (52) présente un premier siège de palier (56), le premier palier (36) étant prévu dans ledit premier siège de palier (56), et dans lequel la partie gaine (51) présente un deuxième siège de palier (57), le deuxième palier (37) étant prévu dans le deuxième siège de palier (57).

3. Ensemble moteur (20) selon l'une quelconque des revendications précédentes, dans lequel la partie fond de chemise d'entrefer (52) est disposée dans la première zone axiale prédéfinie (55) au moins par endroits radialement à l'extérieur de la partie gaine (51).

4. Ensemble moteur (20) selon l'une quelconque des revendications précédentes,
dans lequel le rotor intérieur (32) et le premier palier (36) sont espacés l'un par rapport à l'autre de sorte qu'une deuxième zone axiale (58) est prévue entre le rotor intérieur (32) et le premier palier (36),
et dans lequel la première zone axiale prédéfinie (55) est prévue dans la direction axiale (77) partiellement ou complètement dans la deuxième zone axiale prédéfinie (58).

5. Ensemble moteur (20) selon l'une quelconque des revendications précédentes,
dans lequel la partie gaine (51) présente une extrémité axiale (59) tournée vers la partie fond de chemise d'entrefer (52),
et dans lequel l'ensemble rotor (30) s'étend sur les deux côtés axiaux de l'extrémité axiale (59).

6. Ensemble moteur (20) selon l'une quelconque des revendications précédentes, dans lequel la partie gaine (51) ou la partie fond de chemise d'entrefer (52) présente une section annulaire (70), le stator extérieur (40) étant relié au niveau de sa surface extérieure à la section annulaire (70).

7. Ensemble moteur (20) selon l'une quelconque des revendications précédentes, dans lequel le joint d'étanchéité (60) présente un élément d'étanchéité (61) qui est réalisé sous la forme d'une couche d'un matériau élastomère, reliée à la partie fond de chemise d'entrefer (52).

8. Ensemble moteur (20) selon la revendication 1, dans lequel l'élément d'étanchéité (61) présente une bague d'étanchéité.

9. Ensemble moteur (20) selon l'une quelconque des revendications 1 à 8, dans lequel l'élément d'étanchéité (61) présente une bague de support (64) et une bague d'étanchéité (61), la bague de support (64) étant sur le deuxième côté axial (74) de l'espace d'élément d'étanchéité (62) au moins par endroits en butée contre les saillies de partie gaine (63) ou au moins par endroits contre les saillies de pièce moulée (44), et dans lequel la bague d'étanchéité (61) est disposée entre la bague de support (64) et le premier côté axial (73) de l'espace d'élément d'étanchéité (62).

10. Ensemble moteur (20) selon l'une quelconque des revendications 1 à 9, dans lequel l'élément d'étanchéité (61) est comprimé au moins par endroits dans la direction radiale dans l'espace d'élément d'étanchéité (62).

11. Ensemble moteur (20) selon l'une quelconque des revendications 1 à 10, dans lequel la pièce moulée (42) est réalisée sous la forme d'un disque d'extrémité de stator ou d'un surmoulage de stator.

12. Ensemble moteur (20) selon l'une quelconque des revendications 1 à 11, dans lequel la pièce moulée (42) est réalisée en outre sous la forme d'un corps isolant sur lequel est enroulé l'ensemble de bobinage (43) au moins par endroits.

13. Ensemble moteur (20) selon l'une quelconque des revendications 1 à 12, dans lequel la pièce moulée (42) est réalisée sous la forme d'un support pour une connexion de bobinage (46).

14. Ensemble moteur (20) selon l'une quelconque des revendications 1 à 13, dans lequel le stator extérieur (40) présente sur la surface intérieure des encoches de stator (45), lesdites encoches de stator (45) étant réalisées pour permettre lors du montage de l'ensemble moteur (20) un emmanchement du stator extérieur (40) sur la partie gaine (51) avec un déplacement des saillies de partie gaine (63) dans les encoches de stator (45).

15. Ensemble moteur (20) selon la revendication 14, dans lequel les saillies de partie gaine (63) sont réalisées sous forme de nervures et s'étendent dans la direction axiale jusque dans la zone des encoches de stator (45) afin de permettre ainsi un alignement du stator extérieur (40) par rapport à la partie gaine (51).

16. Ensemble moteur selon la revendication 15, dans lequel une saillie de partie gaine (63) est disposée au moins par endroits dans chaque encoche de stator (45).

17. Ensemble moteur (20) selon l'une quelconque des revendications 14 à 16, dans lequel le stator extérieur (40) présente des pôles de stator saillants (47) avec des têtes polaires de stator (48), et dans lequel les saillies de partie gaine (63) viennent en prise dans la zone des encoches de stator (45) entre les têtes polaires de stator (48).

18. Ensemble moteur (20) selon l'une quelconque des revendications précédentes, dans lequel la partie fond de chemise d'entrefer (52) réalise au moins par endroits une encoche (83), la partie gaine (51) venant en prise dans ladite encoche (83), l'encoche (83) étant réalisée en particulier sous la forme d'une encoche périphérique (83).
